# EUROPEAN PATENT SPECIFICATION

(11) **EP 2 325 849 B1**
(45) Date of publication and mention of the grant of the patent: **08.01.2014**
(21) Application number: 09306114.1
(22) Date of filing: 19.11.2009
(51) Int. Cl.: H02K 3/14

(54) **Continuously transposed conductor**
Drillleiter
Conducteur continuellement transposé

(43) Date of publication of application: 25.05.2011
(73) Proprietor: Essex Europe, 60200 Compiegne (FR)
(72) Inventor: Rabbia, Paolo, 15066, GAVI (IT)
(74) Representative: Intès, Didier Gérard André

(56) References cited:
- US-A- 3 252 117
- US-B1- 6 657 122

## Description

The present invention relates to multiple transposed conductors.

A Continuously Transposed Conductor, or CTC, consists of a group of several identical strands, typically enamelled rectangular wires, which are connected in parallel at the ends, each strand successively and repeatedly taking on every possible position inside the whole conductor cross-section. Figure 1 illustrates a known multiple transposed conductor 1 disclosed for instance in US 6, 657, 122, said transposed conductor 1 comprising a plurality of flat, rectangular partial conductors 3 that are arranged in two side-by-side stacks 4. Between the two stacks 4, a paper strip 5 may be provided. Each strand or partial conductor 3 is provided with an insulating enamel coating. The partial conductors 3 are flatly offset by bending at predetermined intervals such that their position within the overall cross section of the multiple parallel conductor 1 regularly changes at comparatively short intervals. The points of offset are identified by the number 7. The main function of the transposition is to equilibrate the energy distribution inside windings, reducing the electrical losses, and also to give flexibility to the conductor. According to the customer specifications, the strands as a whole may be wrapped, generally with pure cellulose paper tapes or other tapes, netting tapes and monofilaments, if the CTC does not need insulation. The main function of the wrapping is to give electrical insulation and also to perform a mechanical resistance and protection during the work.

Transposed Conductors are generally used in high power transformer windings and other windings of electrical applications.

Indeed, for high power transformers windings, there is a need to limit the additional losses, caused by induced eddy currents in copper conductors by the alternating magnetic leakage flux surrounding the windings. With a CTC, additional losses are reduced thanks to the division of the copper cross-section in a greater number of individually enamelled strands of the same cross-section.

Today however, only CTC with a maximum of around 85 strands can be found in the market. It would be necessary to increase the number of strands used in a CTC in order to give the opportunity to users to implement new or different windings for improving efficiency and other parameters of transformers and other electrical machines.

Increasing the number of strands of the CTC as previously disclosed would be theoretically possible, but more complex and bigger transposing machines and investment cost would be needed.

Document US 3, 252, 117 discloses a Continuously Transposed Conductor with several identical strands, each strand being a subset comprising two wires of rectangular cross section which are insulated from each other by enamel, paper, or other suitable insulation material, and are then taped or wrapped together to form a solid conductive structure.

The aim of the invention is to propose a new structure for a CTC with an increased number of strands, which can be easily manufactured without excessive additional cost.

This aim is attained by a Continuously Transposed Conductor or CTC, comprising several identical strands which are connected in parallel at the ends, each strand successively and repeatedly taking on every possible position inside the whole conductor cross-section, each strand being a subset comprising at least two wires of rectangular cross section, with two flat sides of the two wires facing each other in each subset, characterized in that said at least two wires are firmly joined together by a joining coating applied at least between said two flat sides to form said subset, and by features of dependent claims.

Said at least two wires can be joined together side by side or flat by flat.

In a first embodiment, said joining coating completely surrounds the wires of each subset.

Alternatively, said joining coating completely surrounds the wires of each subset except in the external left and right borders of each subset.

Alternatively, said joining coating is arranged only between the two flat sides of the wires facing each other in each subset.

Features of the invention will become apparent by reading the following detailed description of several possible embodiments, made in a connection with the following accompanying drawings:
- Figure 1, already described, illustrates a multiple transposed conductor of the prior art;
- Figure 2 shows a cross-sectional view of a transposed conductor according to a possible embodiment of the invention;
- Figure 3 is an enlarged cross-sectional view of a strand within transposed conductor of figure 1;
- Figure 4 is an enlarged cross-sectional view of a strand of a transposed conductor according to a second possible embodiment of the invention;
- Figure 5 is a cross sectional view of a third embodiment of a CTC according to the present invention;
- Figures 6 to 9 show several other possible embodiments of a subset which can be used in a CTC according to the invention.

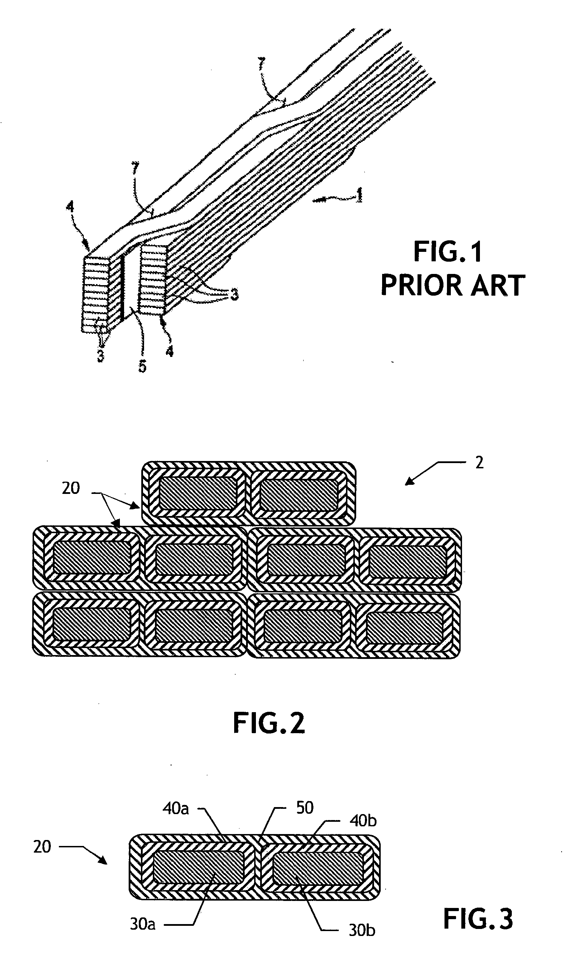

With reference first to figures 2 and 3, a first embodiment of a continuous transposed conductor 2 according to the invention will now be described. In this embodiment, conductor 2 comprises five identical strands 20, which are connected in parallel at the ends, each strand successively and repeatedly taking on every possible position inside the whole conductor cross-section, to form a transposed conductor.

However, while strands of known transposed conductors correspond each to an enamelled rectangular wire, each strand 20 in this first embodiment is a subset comprising two wires 30a, 30b of rectangular cross section joined together by a joining coating 50.

As better shown on figure 3, each wire 30a, 30b, typically made of copper, is advantageously coated with one or more layers of different varnishes or insulating films, in order to form an insulated conductor. The two wires 30a, 30b are joined together side by side. The joining coating can be of different types of varnishes and is applied all around the two wires and on the joining side. Each subset 20 constitutes here a twin conductor.

The CTC 2 is thus composed by five twin conductors and, then a total of ten wires can be identified, while a classical CTC would only have a total of five wires.

Although subset 20 shown on figure 3 comprises two wires, the principle of the invention may be generalized to any subset comprising three or more wires joined together.

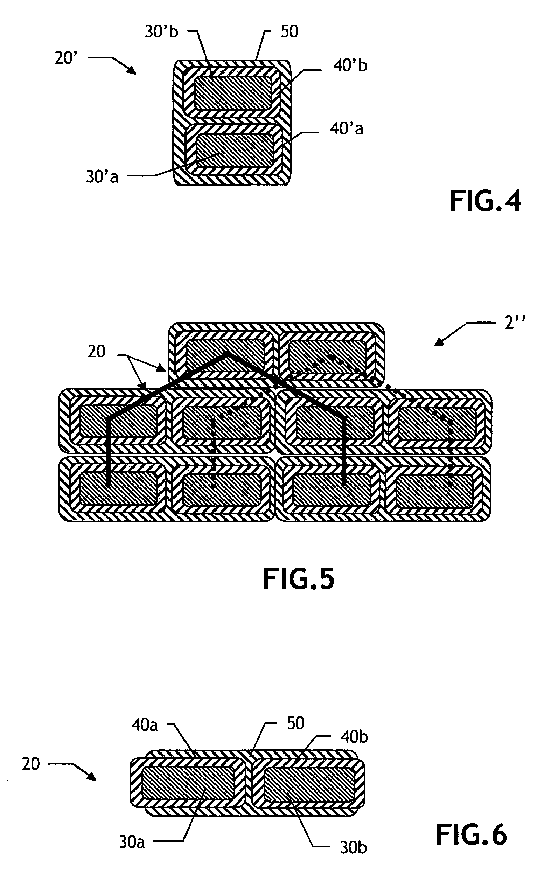

In addition, wires within the same subset can be arranged flat by flat instead of side by side. This alternative arrangement is shown on figure 4 in which a subset 20' comprises two wires 30'a, 30'b, each coated by an insulated layer 40'a, 40'b, and joined together flat by flat by the joining coating 50.

Thanks to the invention, it is thus possible to realize a CTC with a greater number of conductors, typically double or triple of the standard, depending on the composition of the subset (for instance 85 x 2 = 170 wires).

The choice of the arrangement (side by side or flat by flat) within a subset depends on the application for which each CTC is intended to be used.

For instance, in the central part of core-type transformers, an induced electric current is generated with maximum intensity when the cross-section of the conductor turn is axially (perpendicular) inside the force lines of the magnetic field, while the intensity is minimal when the conductor cross-section is longitudinal inside the magnetic field. For this reason, the central part of core-type transformer requires transposed conductors with a wire thickness the lowest as possible (taking into account the actual state-of-art allowing up to around 1.0 - 1.1 mm), while the wire width is not influent.

However, at the transformer ends, the leakage flux is going outside the windings. In this case, it should be convenient to reduce the width instead of the thickness.

For the first application (central part of core-type transformer), a flat by flat arrangement of the wires within one subset of the CTC can be advantageously used. By way of example, compare to a CTC according to prior art in which each strand (unique wire) may have a minimum thickness of 1 mm, use of subsets of two wires of 0, 5 mm-thickness joined flat by flat enables to double, for the same cross section, the ratio of the width over the thickness for each wire, which is an advantage for magnetic flux.

In a different way, for the second application (end part of core-type transformer), a side by side arrangement of the wires within one subset of the CTC will be preferred. By way of example, compare to a CTC according to prior art in which each strand (unique wire) may have a minimum width of around 2, 8 mm, use of subsets of two wires of 1, 4 mm-width joined side by side enables to divide by two, for the same cross section, the ratio of the width over the thickness for each wire.

For some other applications, the user of the conductor may need to have two or more CTC connected in parallel. In such cases, individual CTC is covered by papers or special tapes, unnecessarily using space. With the present invention, a plurality of CTC connected in parallel may be advantageously replaced by single CTC comprising identical subsets with two or more wires, which enables to perform the same function but in more efficient way. An example of such unique CTC is shown on figure 5. Here, CTC 2" has the same structure than CTC 2 of figure 2, with five identical subsets 20 each comprising two wires joined side by side. However, as indicated either in dotter lines, or in full lines, five wires taken on the right respectively on the left of each subset are used together as if they were pertaining to the same CTC. Other correlations are possible without departing the scope of the present invention. In this case, paper needed for insulation is saved since the paper needs only to be wrapped around the whole CTC.

Although the joining coating 50 has always been shown in the figures 2 to 5 as surrounding completely the wires of each subset, other arrangements are possible for firmly fixing the wires together in the same subset. Figures 6 to 9 show several alternate arrangements.

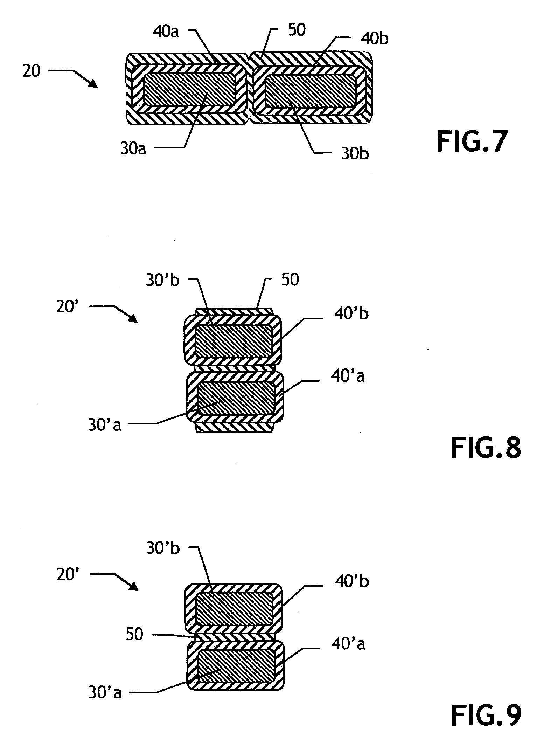

Figures 6 and 8 shows for instance a configuration in which the joining coating 50 surrounds the wires, except in the external left and right borders, respectively for a side by side and a flat by flat arrangement of the wires.

Figure 7 shows a side by side arrangement of the wires where the joining coating 50 has two gaps in the joining plan.

Figure 9 shows a flat by flat arrangement of the wires with a joining coating 50 arranged only between the two flat sides of the wires facing each other.

The joining coating can be made by any material with bonding properties at particular temperatures, including but not limited to epoxy enamels, such as epoxy-phenoxy enamel, aromatic polyamides, polyester or polyesterimide (PE or PEI) enamels or polyvinylformal (PVA) enamels.

Thanks to the invention, it is thus now possible to provide to users a CTC with increased number of wires, with a great flexibility of use depending on the application.

The manufacturing of such CTC is easy to perform. Only a new tool is needed to manufacture subsets of two or more wires joined together by the joining coat 50. Then, the subsets are arranged together to obtain the CTC with few modifications of known CTC machines.

## Claims

1. A Continuously Transposed Conductor hereafter called CTC (2; 2"), comprising several identical strands (20; 20') which are connected in parallel at the ends, each strand (20, 20') successively and repeatedly taking on every possible position inside the whole conductor cross-section, each strand (20; 20') being a subset comprising at least two wires (30a, 30b; 30'a, 30'b) of rectangular cross section, with two flat sides of the two wires facing each other in each subset **characterized in that** said at least two wires are firmly joined together by a joining coating (50) applied at least between said two flat sides to form said subset.

2. A CTC (2; 2") according to claim 1, wherein said at least two wires (30a, 30b) are joined together side by side.

3. A CTC according to claim 1, wherein said at least two wires (30'a, 30'b) are joined together flat by flat.

4. A CTC (2; 2") according to anyone of claims 1 to 3, wherein each of said at least two wires is an insulated conductor.

5. A CTC according to anyone of the preceding claims, wherein said joining coating (50) completely surrounds the wires of each subset.

6. A CTC according to anyone of claims 1 to 5, wherein said joining coating (50) completely surrounds the wires of each subset except in the external left and right borders of each subset.

7. A CTC according to anyone of claims 1 to 5, wherein said joining coating (50) is arranged only between the two flat sides of the wires facing each other in each subset.

## Patentansprüche

1. Drillleiter (2; 2"), im weiteren CTC genannt, umfassend verschiedene identische Stränge (20; 20'), die an den Enden parallelgeschaltet sind, wobei jeder Strang (20; 20') sukzessive und wiederholt jede mögliche Position in dem gesamten Leiterquerschnitt einnimmt, wobei jeder Strang (20; 20') ein Teilsatz ist, der wenigstens zwei Kabel (30a, 30b; 30'a, 30'b) mit rechteckigem Querschnitt umfasst, wobei zwei flache Seiten der beiden Kabel einander in jedem Teilsatz gegenüberliegen, **dadurch gekennzeichnet, dass** die wenigstens zwei Kabel mittels einer Verbindungsbeschichtung (50), die zumindest zwischen den beiden flachen Seiten aufgetragen ist, fest miteinander verbunden sind, um den Teilsatz zu bilden.

2. CTC (2; 2") nach Anspruch 1, wobei die wenigstens zwei Kabel (30a, 30b) nebeneinanderliegend miteinander verbunden sind.

3. CTC nach Anspruch 1, wobei die wenigstens zwei Kable (30'a, 30'b) flach an flach miteinander verbunden sind.

4. CTC (2; 2") nach einem der Ansprüche 1 bis 3, wobei jedes der wenigstens zwei Kabel ein isolierter Leiter ist.

5. CTC nach einem der vorhergehenden Ansprüche, wobei die Verbindungsbeschichtung (50) die Kabel jedes Teilsatzes vollständig umgibt.

6. CTC nach einem der Ansprüche 1 bis 5, wobei die Verbindungsbeschichtung (50) die Kabel jedes Teilsatzes vollständig umgibt, außer an den äußeren linken und rechten Grenzen jedes Teilsatzes.

7. CTC nach einem der Ansprüche 1 bis 5, wobei die Verbindungsbeschichtung (50) nur zwischen den beiden flachen Seiten der Kabel, die einander in jedem Teilsatz gegenüberliegen, angeordnet ist.

## Revendications

1. Conducteur transposé de manière continue appelé ci-après CTC (2 ; 2"), comportant plusieurs brins identiques (20 ; 20') qui sont reliés en parallèle aux extrémités, chaque brin (20, 20') prenant de manière successive et répétée chaque position possible à l'intérieur de toute la section transversale de conducteur, chaque brin (20 ; 20') étant un sous-ensemble comportant au moins deux fils (30a, 30b ; 30'a, 30'b) de section transversale rectangulaire, deux côtés plats des deux fils se faisant face dans chaque sous-ensemble, **caractérisé en ce que** lesdits au moins deux fils sont reliés fermement ensemble par un revêtement de jonction (50) appliqué au moins entre lesdits deux côtés plats pour former ledit sous-ensemble.

2. CTC (2 ; 2") selon la revendication 1, dans lequel lesdits au moins deux fils (30a, 30b) sont reliés ensemble côte à côte.

3. CTC selon la revendication 1, dans lequel lesdits au moins deux fils (30'a, 30'b) sont reliés ensemble plat contre plat.

4. CTC (2 ; 2") selon l'une quelconque des revendications 1 à 3, dans lequel chacun desdits au moins deux fils est un conducteur isolé.

5. CTC selon l'une quelconque des revendications précédentes, dans lequel ledit revêtement de jonction (50) entoure complètement les fils de chaque sous-ensemble.

6. CTC selon l'une quelconque des revendications 1 à 5, dans lequel ledit revêtement de jonction (50) entoure complètement les fils de chaque sous-ensemble excepté dans les bords gauche et droit externes de chaque sous-ensemble.

7. CTC selon l'une quelconque des revendications 1 à 5, dans lequel ledit revêtement de jonction (50) est prévu seulement entre les deux côtés plats des fils se faisant face dans chaque sous-ensemble.
